# EUROPEAN PATENT APPLICATION

(11) **EP 0 775 773 A1**
(43) Date of publication of application: **28.05.1997**
(21) Application number: 95927994.4
(22) Date of filing: 09.08.1995
(51) Int. Cl.: D06M 17/04, A41D 27/06, C09J 9/00, C09J 201/00, C09J 177/00, C09J 167/00

(54) **ADHESIVE PADDING CLOTH, METHOD OF MANUFACTURING THE SAME AND BONDING AGENT FOR ADHESIVE CLOTHS**

(30) Priority: 09.08.1994 JP 187300/94; 26.10.1994 JP 262128/94
(71) Applicant: Asahi Kasei Kogyo Kabushiki Kaisha, Osaka-shi Osaka 530 (JP)
(72) Inventor: MIZUNO, Masayoshi, Mishima-shi Shizuoka 411 (JP); ISOSHIMA, Kazumi, Takatsuki-shi Osaka 569 (JP)
(74) Representative: von Kreisler, Alek, Dipl.-Chem.
(86) International application number: JP9501580
(87) International publication number: WO9605359

(57) **Abstract**

This invention relates to an adhesive interlining cloth which causes strike-through only in a limited degree and has dots of an adhesive thermoplastic resin composition provided on the surface of a base cloth of the interlining cloth, the lower portions on the base cloth surface side of the dots being crosslinked; and a process for producing said interlining cloth which comprises providing dots of an adhesive thermoplastic composition containing a photosensitizer on the surface of base cloth for the interlining cloth, and then irradiating the dots through the base cloth to crosslink the lower portions of the dots.

## Description

### TECHNICAL FIELD

The present invention relates to adhesive interlining cloth, in particular, adhesive interlining cloth to be used for making clothes, and a process for producing adhesive interlining cloth. The present invention is directed also to an adhesive composition which is excellent in adhesive properties to face cloth and is produced by a simple process.

### BACKGROUND ART

Adhesive interlining cloth for clothing is used for easily adhering and joining interlining cloth to face cloth instead of sewing which requires a long time and much labor. It is obtained by providing a hot-melt type resin for adhesion on one side of a base cloth, such as nonwoven fabric, knit or woven cloth, in the form of dots or the like. By heating and pressing the adhesive interlining cloth together with face cloth by means of an iron or the like, the adhesive interlining cloth can be adhered and joined to the face cloth.

However, when adhesive interlining cloth with a hot-melt type resin for adhesion is adhered to face cloth or the like by heating, there is a problem of so-called "strike-through", that is, the resin for adhesion not only adheres to the face cloth but also passes through the base cloth of the interlining cloth to ooze from the reverse side. This strike-through impairs the feeling of the face cloth and moreover causes troubles in the procedure because the resin for adhesion adheres to a hot-pressing machine during heating and pressing.

This problem is inherent in hot-melt type adhesives for fiber. That is, to attain a strong adhesive force, it is necessary that in adhesion by heating, the adhesive itself should melt to fit an object sufficiently. Reducing the strike-through while allowing the adhesive to retain a strong adhesive force means satisfying requirements contradictory to each other at the same time. It is unavoidable that the satisfaction is very difficult.

For solving this problem, there have been proposed double-dot methods in which between a base cloth and an adhesive composition in the form of dots, there is formed a lower layer of dots composed of another resin which is not melted during adhesion by heating or has a high melt viscosity (Japanese Utility Model Registration Examined Publication No. 56-55206, Japanese Patent Unexamined Publication Nos. 4-316682 and 5-230771, and Japanese Patent Examined Publication No. 63-17147).

In all of the above-mentioned methods, a lower layer of dots is formed from a resin for forming the lower layer, at first, and then an upper layer of dots should be formed from an adhesive composition on the lower layer of dots to coincide in position with the lower layer. Therefore, a very complicated production process is necessary, and moreover there have been the following problems: since the two kinds of the resins with different properties are used, no sufficient adhesion can be attained; and when the resin dots of the lower layer do not coincide in position with the adhesive composition dots of the upper layer, the strike-through is not sufficiently prevented.

As adhesives for hot melt, there are also known so-called reactive hot-melt adhesives which are obtained either by introducing block isocyanate groups or epoxy groups into various thermoplastic resins or by blending a compound having a reactive functional group with a thermoplastic resin, which are crosslinked and cured by heating. Such a method, however, is not preferable because the whole resin for adhesion is reacted and cured, resulting in a hard interlining cloth.

Japanese Patent Unexamined Publication No. 2-133678 discloses a method in which a catalyst or the like is incorporated into a thermoplastic resin, whereby a closslinking reaction is induced by heat or ultraviolet rays simultaneously with melting of an adhesive layer. In the case of this method, the crosslinking reaction proceeds simultaneously with the melting during adhesion by heating, resulting in an increased viscosity, and therefore no strike-through occurs. This method, however, has many defects in view of process control because the melting for adhesion and the crosslinking reaction for preventing the strike-through by increasing the viscosity should be carried out while maintaining a delicate balance between them.

### DISCLOSURE OF THE INVENTION

Accordingly, an object of the present invention is to provide an adhesive interlining cloth which can be adhered to face cloth by a simple operation without impairing the feeling of the face cloth in a step of joining the interlining cloth to the face cloth because the strike-through of an adhesive is markedly suppressed.

Another object of the present invention is to provide a process for preparing the above-mentioned improved adhesive interlining cloth by a simple procedure.

More specific objects of the present invention are to provide an adhesive interlining cloth in which only the lower portions on the base cloth surface side of dots, which are made of an adhesive composition provided on one side of the base cloth of the interlining cloth are crosslinked and cured, and in the adhesion of the interlining cloth to a face cloth, the crosslinked and cured composition of the lower portions prevents the run-off of a melt of the upper portion of the dots, whereby the strike-through is prevented. Another object is to provide an adhesive composition suitably usable for preparing such an interlining cloth.

The objects of the present invention are achieved by an adhesive interlining cloth having a structure composed of a base cloth constituting the main body of the interlining cloth and a plurality of dots of a thermoplastic resin composition for adhesion provided on one side of the base cloth, wherein the lower portions on the base cloth surface side of said dots of the adhesive resin are composed of a crosslinked product of said adhesive thermoplastic resin.

Such an adhesive interlining cloth is produced by providing dots of an adhesive thermoplastic resin composition on one side of base cloth which constitutes the main body of the interlining cloth, and then irradiating the dots with actinic rays through the base cloth surface to photo-crosslink the lower portions on the base cloth side of said dots of the thermoplastic resin for adhesion.

The adhesive interlining cloth thus obtained has a structure in which only the lower portions on the base cloth surface side are composed of a crosslinked product and the upper portions are composed of a non-crosslinked resin. During adhering and joining operations by heating and pressing, the upper portions are melted to be strongly adhered to a face cloth, but the lower portions are composed of a crosslinked product and hence do not cause the so-called strike-through phenomenon, i.e., the passage of the resin through the base cloth and its oozing from the reverse side.

The adhesive composition used in the above-mentioned adhesive interlining cloth comprises a thermoplastic resin and, if necessary, further comprises a photosensitizer and optionally a crosslinking agent. The adhesive composition is easily photo-crosslinked by irradiation with actinic rays and consequently the melting point of the composition is raised, the viscosity of a melt of the composition is increased, or the composition becomes non-meltable. Therefore, when the adhesive composition is provided on one side of the base cloth in the form of dots and then irradiated with actinic rays through the base cloth, only the lower portions on the base cloth surface side of the dots can easily be made into a crosslinked product.

Since the actinic rays in the above method are absorbed by the dots, the intensity of the rays is highest at the lowest portions of the dots and becomes weaker as the layer of the dots comes near to the uppermost layer. Therefore, it is possible to make only the lower portions into a crosslinked product and keep the upper portions non-crosslinked.

However, since the irradiation with the actinic rays is carried out through the base cloth, the amount of the actinic rays cast on the adhesive composition is limited in some cases by the amount of the actinic rays transmitted by the base cloth, the photo-deterioration and yellowing of the base cloth by the actinic rays, etc. Therefore, as the make-up of the adhesive composition used in this case, it is preferable to choose properly a make-up which permits efficient crosslinking and curing by the irradiation with the actinic rays.

The base cloth used in the adhesive interlining cloth of the present invention may be the same as those conventionally used in interlining cloth. As the base cloth, there can be used nonwoven fabric, knit, woven cloth and laminated fabric thereof. As the resin for adhesion provided in the form of dots on one side of the base cloth, there is used a hot-melt type resin for adhesion composed mainly of a thermoplastic resin. The thermoplastic resin as the main component is a chief material for attaining a strong adhesive force to the face cloth when it is melted by heating and solidified by cooling. As the thermoplastic resin for the adhesive interlining cloth, there can be used resins such as polyamides, polyesters, polyester amides, polyurethanes, polyethylenes, polypropylenes, ethylene-propylene copolymers, EVA, ethylene-acrylic acid copolymers, styrene-butadiene copolymers, etc. Since the adhesion of the adhesive interlining cloth to the face cloth by heating is often carried out usually at 160 - 180°C, the melting point of the thermoplastic resin is preferably below the adhesion temperature, more preferably 160°C or lower. However, a thermoplastic resin having a melting point higher than 160°C in itself may also be used when the melting point of the resin composition is 180°C or lower.

The content of the thermoplastic resin in the resin comprosition is preferably 50% or more, more preferably 70% to 99.9%.

Of such thermoplastic resins, polyamide type resins are particularly preferred because of not only their bond properties such as adhesive properties to various fibers but also their photo-crosslinkability. As the polyamide type resins to be used, there can be exemplified nylon 6, nylon 66, nylon 6/66, nylon 11, nylon 12, nylon 610, nylon 612, and copolymer nylons obtained from monomers used for producing these nylons; various diamines; copolymer nylons obtained from a dibasic acid and a caprolactam; and polyester amide resins. The polyester amide resins can be synthesized by placing a polyamide copolymer together with a dibasic acid and a glycol to react the same with them. Such polyester amide resins are easily crosslinked and cured by irradiation with actinic rays by itself or with the aid of a photosensitizer and a crosslinking agent and hence are preferably used in the present invention.

The photosensitizer added to such a thermoplastic resin is such that when irradiated with actinic rays, it absorbs light to assume an excited state and induces hydrogen abstraction reaction or generation of a radical by cleavage. As such a compound, carbonyl compounds, in particular, aromatic carbonyl compounds are useful. Specific examples of the photosensitizer are benzophenone and its derivatives such as 4,4'-bis(dialkylamino)benzophenones, methyl o-benzoylbenzoate, 4-carboxybenzophenone, etc.; thioxanthone and its derivatives such as 2-chlorothioxanthone, 2-methylthioxanthone, 2,4-diethylthioxanthone, etc.; anthraquinone and its derivatives such as 2-ethylanthraquinone, 2-chloroanthraquinone, etc.; acetophenone and its derivatives such as diethoxyacetophenone, 2-hydroxy-2-methylpropiophenone, α,α'-dichloro-4-phenoxyacetophenone, 1-hydroxycyclohexyl phenyl ketone, etc.; benzoin and its derivatives such as benzoin methyl ether, benzoin ethyl ether, benzoin butyl ether, etc.; benzyl; benzyldimethylketals; α-acyloxime esters; acylphosphine oxides; an camphorquinone. As these compounds, various products are on the market and are easily available. As specific examples of each compound, there can be used, for example, the compounds described in detail in Seishi Kato, "Ultraviolet Curing System", Synthetic Technology Center.

The hydrogen abstraction reaction or radical generation induced by the photosensitizer by irradiation with actinic light accelerates the photo-crosslinking reaction of the thermoplastic resin. Of the above-exemplified photosensitizers, benzophenone, in particular, is preferably used because it does not cause coloring.

The amount of the photosensitizer incorporated into the adhesive composition is 0.1 to 5% by weight, preferably 0.5 to 3% by weight. When the amount is less than 0.1%, the photo-crosslinking-accelerating effect is not sufficient. When the photosensitizer is added in an amount of more than 5% by weight, the crosslinking effect is not markedly heightened and bleeding is undesirably caused by a change with time after adhesion.

Further, addition of a crosslinking agent is also effective in further accelerating the photo-crosslinking reaction of the adhesive composition of the present invention.

The crosslinking agent used in the present invention is a compound which accelerates the conversion of the resin for adhesion to a crosslinked product as follows: the compound is graft polymerized onto the thermoplastic resin or polymerized into a polymer enfolding the thermoplastic resin, in the presence of the photosensitizer by irradiation with actinic rays. The compound includes those having one or more ethylenic unsaturated groups in the molecule, for example, compounds having one or more vinyl groups, vinylidene groups, allyl groups or the like.

As such compounds, there are various oligomers and monomers, which have one or more ethylenic unsaturated groups. As the oligomers, there can be exemplified unsaturated polyesters, alkyd resins, oligoester acrylates, polyoxyalkylene glycol di(meth)acrylates, urethane (meth)acrylates, epoxy(meth)acrylates, etc. As the monomers, there can be exemplified acrylic acid, methacrylic acid, and esters thereof such as alkyl (meth)acrylates, hydroxyalkyl (meth)acrylates, pentaerythritol tetra(meth)acrylate, aminoalkyl (meth)acrylates, benzyl (meth)acrylates, phenoxy (meth)acrylates, tri(meth)acryloyloxyethyl isocyanurate, glycidyl (meth)acrylate, etc.; acrylamide, methacrylamide, and derivatives thereof such as N-alkyl (meth)acrylamides, N,N'-alkylene di(meth)acrylamides, diacetone acrylamide, etc.; allyl compounds such as triallyl isocyanurate, etc.; and vinyl compounds such as N-vinylpyrrolidone, styrene, divinylbenzene, etc. As these compounds, commercially available ones are described in detail in the above-mentioned publication, Seishi Kato, "Ultraviolet Curing System" as in the case of the photosensitizer, and they may be used.

The amount of the crosslinking agent added to the adhesive composition is at most 25% by weight and is usually 0 to 15% by weight. Characteristics of the composition as a hot-melt type adhesive for adhesive interlining cloth largely depend on characteristics of the thermoplastic resin, i.e., the main component. Therefore, when the crosslinking agent is added in a proportion of more than 25% by weight, it is difficult for the composition to retain the characteristics of the hot-melt type adhesive.

In addition, tackifiers, waxes, antioxidants, fillers, etc. may be incorporated into the adhesive composition of the present invention if necessary.

An example of the adhesive composition for adhesive interlining cloth of the present invention is a composition containing the photosensitizer and the crosslinking agent in amounts of 0.5 to 3 parts by weight and 0 to 15 parts by weight, respectively, per 100 parts by weight of the thermoplastic resin.

The adhesive composition containing the thermoplastic resin and other components may be used in the form of pellets, a ribbon, powder or the like.

As a method for providing this adhesive composition on base cloth in the form of dots in order to use the composition as an adhesive for the adhesive interlining cloth, a conventional method for producing adhesive interlining cloth is used. In detail, the adhesive composition in the form of powder or paste is packed into the concavities of an engraved roll and transferred onto the base cloth, or it is provided on the base cloth through the holes of a stencil or a template, and then the composition on the base cloth is heated or dried, whereby the composition can be provided on the base cloth in the form of dots. In addition, the adhesive composition in the form of pellets or a ribbon is melted, provided on base cloth in the form of dots, and then cooled, whereby the adhesive interlining cloth can be obtained.

In the present invention, the adhesive interlining cloth is produced by providing such a resin for adhesion composed mainly of the thermoplastic resin on one side of base cloth in the form of dots, and then crosslinking the lower portions on the base cloth surface side of the dots into a crosslinked product.

Here, the lower portions on the base cloth surface side do not always include the whole lowest portions of the dots. That is, the whole lowest portions of dots of the thermoplastic resin need not be crosslinked. The reason is as follows: strike-through is caused by oozing of the thermoplastic resin through the spaces in fiber constituting the base cloth, and therefore to prevent the strike-through, it is sufficient that the resin is crosslinked over at least the fiber spaces.

The crosslinking in the present invention refers to the following operation: the thermoplastic resin used as a resin for adhesion is modified to be increased in non-melt or melt viscosity, whereby its fluidity during heating is reduced. That is, the crosslinked product of the resin for adhesion used in the present invention includes not only an insoluble and non-meltable product produced by complete three-dimensional crosslinking of the resin for adhesion, but also a product having a higher softening point or melting temperature or having an increased melt viscosity and hence a reduced fluidity, as compared with the resin for adhesion before the modification by the crosslinking. In this case, as to a measure for confirming the degree of the modification by the crosslinking, the solubility of the crosslinked product in a solvent is investigated and whether the solubility is lower than before the crosslinking can be used as the measure.

In the present invention, the degree of crosslinking required of the crosslinked product cannot be unequivocally determined because it varies depending on the kind of the base cloth and the conditions of joining to the face cloth by heating. Although the degree of crosslinking is not limited to the following ranges, the crosslinked product preferably has a softening or melting point higher by 10°C or more or a melt index (MI) value of one-half or less as compared with the resin for adhesion before the modification by the crosslinking. These changes and the above-mentioned solubility change, however, are mere measures, and the degree of crosslinking required in practice can be determined by producing adhesive interlining clothes by varying the degree of crosslinking, and evaluating characteristic values such as adhesive strength and strike-through properties of the interlining clothes.

There are various methods for crosslinking the thermoplastic resin. In the present invention, when the whole dots provided on the base cloth surface are crosslinked, the adhesive interlining cloth cannot be adhered and joined to the face cloth, or no sufficient adhesive force can be attained even if the adhesion and joining are possible. Therefore, only the lower portions on the base cloth surface side of the dots should be composed of a crosslinked product and the upper portions should be composed of the non-crosslinked resin. When such a structure is employed, the upper portions are melted to be strongly adhered to face cloth by an adhering and joining operation by heating and pressing. Since the lower portions are composed of a crosslinked product, it is possible to prevent the so-called strike-through, i.e., the passage of the resin through the base cloth and its oozing from the reverse side.

As a specific method for the crosslinking, photo-crosslinking of the thermoplastic resin by irradiation with actinic rays can be applied. In detail, a resin for adhesion composed mainly of the thermoplastic resin is provided on the surface of the base cloth in the form of dots, after which only the lower portions of the dots are photo-crosslinked into a crosslinked product of the resin for adhesion, by irradiation with actinic rays from the base cloth surface side, whereby the adhesive interlining cloth of the present invention can be produced. In this method, since the actinic rays are absorbed by the dots, the intensity of the rays is highest at the lowest portions of the dots and becomes weaker as the layer of the dots comes near to the uppermost layer. Therefore, it is possible to make only the lower portions into a crosslinked product and keep the upper portions non-crosslinked.

In this case, the degree of crosslinking of the resin for adhesion can be adjusted by properly adjusting the irradiation dose of the actinic rays, and therefore the adhesive interlining cloth is produced by adjusting the irradiation dose of the actinic rays, depending on the kinds of base cloth, the resin for adhesion, and the mode of use of the interlining cloth.

The dots of the resin for adhesion of the adhesive interlining cloth thus produced have a structure in which the crosslinked product constituting the lower portions and the non-crosslinked resin constituting the upper portions are connected. The lower portions composed of the crosslinked product adhere strongly to the base cloth, and they prevent the molten non-crosslinked resin constituting the upper portions from flowing into the base cloth, namely, they prevent the so-called strike-through. On the other hand, the molten non-crosslinked resin constituting the upper portions penetrates only into the face cloth and performs its function as a hot-melt adhesive sufficiently to exhibit a stronger adhesive force.

Furthermore, unlike in conventional so-called double-dot type adhesive interlining cloth, the dots of the resin for adhesion have a continuous structure composed of the same resin, though the resin is crosslinked in the lower portions but not in the upper portions, and therefore no peeling occurs between the upper portions and the lower portions, so that the adhesive force and the resistance to cleaning are excellent and that the feeling is not impaired.

### BRIEF DESCRIPTION OF THE DRAWINGS

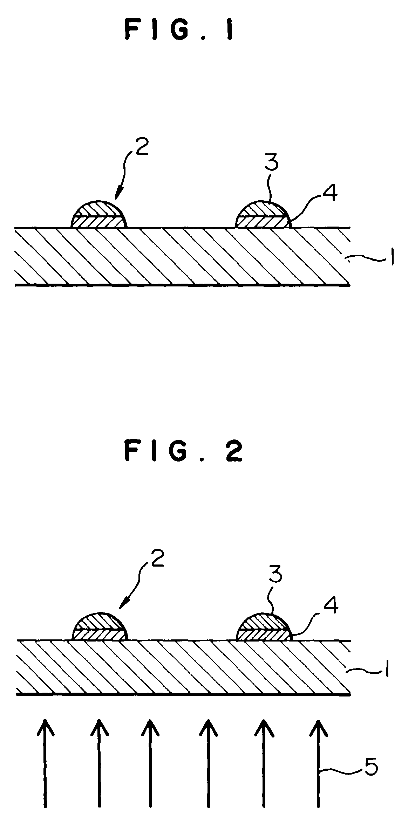

Fig. 1 is a sectional illustration of the structure of the adhesive interlining cloth of the present invention. It shows that in the adhesive interlining cloth, a plurality of dots 2 of an adhesive composition are arranged on the surface of base cloth 1 so that the dots 2 are formed of an adhesive thermoplastic resin layer 3 and a crosslinked resin layer 4.

Fig. 2 schematically illustrates the principle of production of the adhesive interlining cloth of the present invention and shows the following process: the dots 2 arranged on the surface of the base cloth 1 of the interlining cloth are irradiated with actinic light 5 through the base cloth, so that the resin is crosslinked on the base cloth surface side in the dots 2, whereby the adhesive interlining cloth of the present invention is formed.

### BEST MODE FOR CARRYING OUT THE INVENTION

The process for producing adhesive interlining cloth of the present invention and the adhesive composition of the present invention are explained below in detail, with reference to the drawings and the like.

Fig. 1 shows the adhesive interlining cloth of the present invention. The upper portions of dots 2 of a resin for adhesion formed on one side of base cloth 1 are composed of the non-crosslinked resin for adhesion 3, and the lower portions on the base cloth surface side are composed of a crosslinked product 4 of the resin for adhesion. The crosslinked product 4 adheres strongly to the base cloth 1 and performs the following function: when the non-crosslinked resin for adhesion 3 is melted by pressing and heating, the crosslinked product 4 prevents the melt from passing through the base cloth 1. Moreover, by virtue of this function, the resin for adhesion penetrates only into the face cloth, so that the adhesion between the interlining cloth and the face cloth is improved.

Fig. 2 illustrates the process of the present invention. The lower portions of the dots 2 of the resin for adhesion become the crosslinked product 4 owing to the action of actinic rays 5. In this case, the degree of crosslinking in the crosslinked product 4 can be adjusted by adjusting the irradiation dose of the actinic rays 5 and by varying the intensity of the actinic rays 5 and the irradiation time.

As described above, the adhesive composition of the present invention is provided on the base cloth in the form of dots. In this case, the shape of the dots of the adhesive composition formed on the base cloth is not limited and it is sufficient that the dots form a pattern of separated small areas such as a large number of discontinuous spots instead of uniform application of an adhesive layer on the whole surface of the base cloth, so as not to impair the feeling when adhered to the face cloth. The present invention also includes the case where the dots are linear.

The dots of the resin for adhesion formed on the base cloth are preferably dots with a diameter of 0.1 to 4 mm. The number of the dots is usually 1 to 250 per 2.5 cm in length of the base cloth, and the amount of the dots is usually approximately 0.5 - 50 g per m² of the base cloth surface.

After the dots of the resin for adhesion are thus formed on the base cloth, the dots are irradiated with actinic rays 5 from the base cloth surface side in order to photo-crosslink only the lower portions of the dots.

As the actinic rays 5 used here, there can be used various actinic rays such as visible rays, ultraviolet rays, far ultraviolet rays, X-rays, γ-rays, electron rays, infrared rays, etc. Actinic rays preferably usable in the present invention are ultraviolet and visible rays, namely, rays having a wavelength in the range of 700 nm to 180 nm. As a source of such rays, there can be used well-known ones such as various mercury lamps, metal halide lamps, arc lamps, xenon lamps, fluorescent lamps, incandescent lamps, semiconductor luminescent elements, lasers, sunlight, etc. The irradiation with the actinic rays is carried out after providing the resin for adhesion in forms of dots, though it may be carried out in parallel with a step of forming the resin into dots. That is, the formation of the dots and the crosslinking and curing of the lower portions may be allowed to proceed at the same time by irradiation with the actinic rays in a heating or drying step in the above-mentioned procedure.

As the thermoplastic resin as the main component of the resin for adhesion, the same thermoplastic resin as the main component of a hot-melt type adhesive is usually usable, as described above. Polyamide type resins are particulary preferably usable. As the usable polyamide type resins, there can be exemplified nylon 6, nylon 66, nylon 6/66, nylon 11, nylon 12, nylon 610, nylon 612, copolymer nylons obtained from monomers used for producing these nylons, and various other copolymer nylons. In addition, polyester amide resins are also preferably used. The polyester amide resins can be synthesized by placing a polyamide copolymer together with a dibasic acid and a glycol to react the same with them. The polyamide type resins are preferably used due to an easy crosslinkability and curability by actinic rays, in particular, ultraviolet rays of 180 nm to 380 nm, and bonding properties such as adhesive properties as well.

The present invention is more concretely illustrated below with the following examples.

### Example 1

To 100 parts by weight of a quaternary copolymer polyamide (a nylon 6-66-12-610 copolymer, Toray Nylon Powder 843P48A, mfd. by Toray Industries, Inc.) was added 2 parts by weight of benzophenone powder, and they were mixed in a blender to prepare a photosensitizer-containing adhesive composition. A solution of this composition in ethanol was applied on a PET film to form an adhesive resin layer of 35 µm thickness on the film.

When this adhesive composition layer was irradiated in an irradiation dose of 750 mJ/cm² by a low-pressure mercury-vapor lamp (a germicidal lamp; dominant wavelength 254 nm, illuminance 2.5 mW/cm²) as a light source, the surface of the resin layer became ethanol-insoluble, indicating that it was crosslinked.

Weft-inserted warp knitted fabric obtained by using acrylic spun yarn 1/64Nm as weft and nylon 66 filament 30d/10f as warp was dyed and then raised according to a conventional method. The thus treated fabric as a base cloth was coated with the above-mentioned adhesive composition by means of a powder dot coating machine [mfd. by Caratsch Co. (Switzerland)] so that dots might be formed in a number of 7 dots/2.5 cm in each of the lengthwise and crosswise directions in an amount of 8 g/m², whereby the adhesive interlining cloth was produced. In this case, the constitution of the base cloth was as follows: lengthwise density (wales) 26 pieces/2.5 cm, crosswise density (course) 52 pieces/2.5 cm, weight 52 g/m².

This adhesive interlining cloth blank was irradiated by the aforesaid light source from the base cloth surface side in an irradiation dose of 1500 mJ/cm² to crosslink the lower portions of dots of the adhesive composition.

As a reference example, another irradiated interlining cloth was also prepared by irradiation in an irradiation dose of 750 mJ/cm² from the side on which the dots of the adhesive composition had been formed.

The adhesive force and strike-through properties of the interlining clothes obtained were evaluated. The results are shown in Table 1.

As evaluation methods, the following methods were employed.
(1) Adhesive force: samples were prepared by adhering each adhesive interlining cloth to a face cloth for clothing (wool/polyester blended yarn gaberdine) with an adhering machine for adhesive interlining cloth (JR-600, mfd. by Asahi Sen-i Kikai Kogyo K.K.). The adhering conditions were as follows: belt surface temperature 140°C, pressure 3 kg/cm², time 15 seconds. The peel strength (adhesive strength) of the obtained samples was measured by the peel strength measuring method prescribed in JIS L 1086-1983.
(2) Strike-through properties: the base cloth side of the adhesive interlining cloth of each sample prepared in the adhesive force evaluation (1) was subjected to sensory evaluation in terms of hand feeling, and the strike-through properties were accorded any of the three ranks A, B and C. A: no rough feel of the adhesive due to strike-through, B: somewhat rough feel, C: distinctly rough feel.

### Example 2

To 100 parts by weight of a copolymer polyamide (a nylon 6-66-12 ternary copolymer, Vestamelt, 350P816/20 mfd. by Daicell-Hüls Ltd.) was added 2 parts by weight of benzophenone powder, and they were mixed in a blender to prepare a photosensitizer-containing adhesive composition. When the crosslinkability of the composition was confirmed on a PET film in the same manner as in Example 1, it was found that the composition was crosslinked at an irradiation dose of 750 mJ/cm².

Half-weave tricot fabric obtained from nylon 66 filament 40d/13f was dyed according to a conventional method. The thus treated fabric as a base cloth was coated with the above-mentioned adhesive composition by means of a powder dot coating machine [mfd. by Caratsch Co. (Switzerland)] so that dots might be formed in a number of 21 dots/2.5 cm in each of the lengthwise and cross-wise directions in an amount of 11 g/m², whereby the adhesive interlining cloth was produced. In this case, the constitution of the base cloth was as follows: lengthwise density (wales) 32 pieces/2.5 cm, crosswise density (course) 40 pieces/2.5 cm, weight 58 g/m².

This adhesive interlining cloth blank was irradiated by the same light source as used in Example 1 from the base cloth surface side in an irradiation dose of 1500 mJ/cm² to crosslink the lower portions of dots of the adhesive composition.

As a reference example, another irradiated interlining cloth was also prepared as in Example 1 by irradiation in an irradiation dose of 750 mJ/cm² from the side on which the dots of the adhesive composition had been formed.

The adhesive force and strike-through properties of the interlining clothes obtained were evaluated in the same manner as in Example 1. The results are shown in Table 1.

### Example 3

To 100 parts by weight of a copolymer polyamide (a nylon 6-66-12 ternary copolymer, Platamide M1757 PTA, mfd. by Nippon Rilsan K.K.) was added 2 parts by weight of benzophenone powder, and they were mixed in a blender to prepare an a photosensitizer-containing adhesive composition. When the crosslinkability of the composition was confirmed on a PET film in the same manner as in Example 1, it was found that the composition was crosslinked at an irradiation dose of 750 mJ/cm².

Plain weave fabric obtained from polyester filament 50d/24f false-twisted yarn was reduced in weight by about 25% and dyed according to a conventional method. The thus treated fabric as base cloth was coated with the above-mentioned adhesive composition by means of a powder dot coating machine [mfd. by Caratsch Co. (Switzerland)] so that dots might be formed in a number of 20 dots/2.5 cm in each of the lengthwise and cross-wise directions in an amount of 9 g/m², whereby the adhesive interlining cloth was produced. In this case, the constitution of the base cloth was as follows: warp density 96 pieces/2.5 cm, weft density 84 pieces/2.5 cm, weight 34 g/m².

This adhesive interlining cloth blank was irradiated by the same light source as used in Example 1 from the base cloth surface side in an irradiation dose of 1500 mJ/cm² to crosslink the lower portions of dots of the adhesive composition.

As a reference example, another irradiated interlining cloth was also prepared as in Example 1 by irradiation in an irradiation dose of 750 mJ/cm² from the side on which the dots of the adhesive composition had been formed.

The adhesive force and strike-through properties of the interlining clothes obtained were evaluated in the same manner as in Example 1. The results are shown in Table 1.

**Table 1**

| Example | | Adhesive strength | Strike-through properties |
|---|---|---|---|
| 1 | Example | 450 g/2.5 cm | A |
| | Blank | 325 g/2.5 cm | B |
| | Reference Example | 10 g/2.5 cm | B |
| 2 | Example | 385 g/2.5 cm | A |
| | Blank | 270 g/2.5 cm | C |
| | Reference Example | 10 g/2.5 cm | C |
| 3 | Example | 570 g/2.5 cm | A |
| | Blank | 405 g/2.5 cm | B |
| | Reference Example | 20 g/2.5 cm | B |

### Evaluation of strike-through properties

- A :: No rough feel of the adhesive due to strike-through.
- B :: Somewhat rough feel.
- C :: Distinctly rough feel.

In Table 1, the adhesive interlining clothes of all the examples are superior in strike-through properties and adhesive force to the respective blanks not subjected to crosslinking and the respective reference examples obtained by crosslinking the upper portions of the dots by the irradiation from the adhesive dots side. In the reference examples, only the upper portions were crosslinked but not the lower portions, and therefore the reference examples have substantially the same strike-through properties as those of the blanks, though they have almost no adhesive force.

### Example 4

With 100 parts by weight of the same polyamide type hot-melt adhesive composition as used in Example 1 (a quaternary copolymer polyamide, Toray Nylon Powder 843P48A, mfd. by Toray Industries, Inc.) were mixed 2 parts by weight of benzophenone powder and 10 parts by weight of N,N'-methylenebisacrylamide in a blender to prepare an adhesive composition containing the photosensitizer and the crosslinking agent. When the crosslinkability by ultraviolet rays of the composition was investigated on a PET film in the same manner as in Example 1, it was found that the composition was insolubilized (crosslinked) by irradiation in an irradiation dose of 400 mJ/cm².

An adhesive interlining cloth blank was prepared by the use of this adhesive composition in the same manner as in Example 1 and irradiated from the base cloth surface side in a dose of 800 mJ/cm² to crosslink the adhesive composition, whereby the adhesive interlining cloth was produced. The adhesive interlining cloth obtained was evaluated in the same manner as in Example 1 to find that it had an adhesive strength of 480 g/2.5 cm and strike-through properties rated A. In addition, when an ultraviolet fluorescent lamp (dominant wavelength 360 nm, illuminance 2.5 mW/cm²) was used as a light source, it was found that the adhesive composition was insolubilized (crosslinked) at an illuminance of 600 mJ/cm². Another adhesive interlining cloth was produced by crosslinking the adhesive composition by irradiation by this light source from the base cloth surface side in a dose of 1200 mJ/cm². The adhesive interlining cloth obtained was evaluated in the same manner as in Example 1 to find that it had an adhesive strength of 490 g/2.5 cm and strike-through properties rated A.

### Example 5

To 100 parts by weight of a polyamide resin composed of nylon 12 was added 2 parts by weight of benzophenone powder, and they were mixed in a blender to prepare a photosensitizer-containing adhesive composition. A solution of this composition in ethanol was applied on a PET film to form an adhesive resin layer of 35 µm thickness on the film.

When this adhesive composition layer was irradiated in an irradiation dose of 750 mJ/cm² by using as a light source the low-pressure mercury-vapor lamp described in Example 1, the surface of the resin layer became ethanol-insoluble, indicating that it was crosslinked.

Weft-inserted warp knitted fabric obtained by using acrylic spun yarn 1/64Nm as weft and nylon 66 filament 30d/10f as warp was dyed and then raised according to a conventional method. The thus treated fabric as a base cloth was coated with the above-mentioned adhesive composition by means of a powder dot coating machine [mfd. by Caratsch Co. (Switzerland)] so that dots might be formed in a number of 7 dots/2.5 cm in each of the lengthwise and crosswise directions in an amount of 8 g/m², whereby the adhesive interlining cloth was produced. In this case, the constitution of the base cloth was as follows: lengthwise density (wales) 26 pieces/2.5 cm, crosswise density (course) 52 pieces/2.5 cm, weight 52 g/m².

This adhesive interlining cloth was irradiated by the aforesaid light source from the base cloth surface side in an irradiation dose of 1500 mJ/cm² to crosslink the lower portions of the dots of the adhesive composition, whereby the adhesive interlining cloth was produced. The adhesive interlining cloth thus obtained was evaluated in the same manner as in Example 1 to find that it had an adhesive strength of 440 g/2.5 cm and strike-through properties rated A.

### Example 6

Plain weave fabric obtained from polyester filament 30d/24f false-twisted yarn was reduced in weight by about 25% and dyed according to a conventional method. The thus treated fabric as a base cloth was coated with a polyester type hot-melt adhesive (HARDEC A3410, mfd. by ASAHI Chemical Industry Co., Ltd.) by means of a powder dot coating machine [mfd. by Caratsch Co. (Switzerland)] so that dots might be formed in a number of 32 dots/2.5 cm in each of the lengthwise and cross-wise directions in an amount of 14 g/m², whereby the adhesive interlining cloth was produced. In this case, the constitution of the base cloth was as follows: warp density 93 pieces/2.5 cm, weft density 63 pieces/2.5 cm, weight 23 g/m².

This adhesive interlining cloth was irradiated by the same light source as used in Example 1 from the base cloth surface side in an irradiation dose of 2000 mJ/cm² to crosslink the lower portions of dots of the adhesive composition, whereby the adhesive interlining cloth was produced. The adhesive interlining cloth thus obtained was evaluated in the same manner as in Example 1 to find that it had an adhesive strength of 800 g/2.5 cm and strike-through properties rated A.

### Example 7

Weft-inserted warp knitted fabric obtained by using acrylic spun yarn 1/64Nm as weft and nylon 66 filament 20d/7f as warp was dyed and then raised according to a conventional method. The thus treated fabric as base cloth was coated with a quaternary copolymer polyamide (a nylon 6-66-12-6,10 copolymer, Toray Nylon Powder 843P48A, mfd. by Toray Industries, Inc.) by means of a powder dot coating machine [mfd. by Caratsch Co. (Switzerland)] so that dots might be formed in a number of 17 dots/2.5 cm in each of the lengthwise and crosswise directions in an amount of 10 g/m², and the coated base cloth was pressed between metal rollers to produce the adhesive interlining cloth. In this case, the constitution of the base cloth was as follows: lengthwise density (wales) 30 pieces/2.5 cm, crosswise density (course) 53 pieces/2.5 cm, weight 47 g/m².

This adhesive interlining cloth was irradiated by the same light source as used in Example 1 from the base cloth surface side in an irradiation dose of 1500 mJ/cm² to crosslink the lower portions of dots of the adhesive composition, whereby the adhesive interlining cloth was produced. The adhesive interlining cloth thus obtained was evaluated in the same manner as in Example 1 to find that it had an adhesive strength of 1120 g/2.5 cm and strike-through properties rated A.

### INDUSTRIAL APPLICABILITY

The adhesive interlining cloth of the present invention does not cause strike-through and hence can be joined to a face cloth without imparing the feeling of the face cloth. Since the adhesive interlining cloth of the present invention is substantially free from strike-through, it hardly adheres to a hot-pressing machine used in a joining procedure and hence reduces labor required to carry out operations in the joining procedure. In addition, the process for producing the adhesive interlining cloth of the present invention is industrially very useful because the manufacturing procedure is very simple due to the use of a unique photo-crosslinkable composition in combination with irradiation with actinic rays.

## Claims

1. An adhesive interlining cloth comprising a structure comprised of a base cloth constituting the main body of the interlining cloth and a plurality of dots of an adhesive resin composition provided on one side of the base cloth, wherein the lower portions on the base cloth surface side of the dots of said resin composition comprise a crosslinked product of said resin composition.

2. The adhesive interlining cloth according to claim 1, wherein the lower portions on the base cloth side of the dots of the adhesive thermoplastic resin composition comprise a photo-crosslinked product of said resin composition.

3. The adhesive interlining cloth according to claim 1 or 2, wherein said dots have a size corresponding to an average diameter of 0.1 to 4 mm and are provided in an amount of 0.5 to 50 g/m² of the base cloth surface.

4. The adhesive interlining cloth according to claims 1 to 3, wherein the adhesive resin is a polyamide type resin or a polyester resin.

5. A process for producing adhesive interlining cloth, comprising by providing a plurality of dots of an adhesive resin composition on one side of a base cloth which comprises the main body of the interlining cloth, and then irradiating the dots with actinic rays through the base cloth surface to photo-crosslink the lower portions on the base cloth side of the dots of said thermoplastic resin composition.

6. A process for producing the adhesive interlining cloth according to claim 5, wherein the adhesive resin composition comprises a photo-sensitizer.

7. A process for producing the adhesive interlining cloth according to claim 6, wherein the photosensitizer is benzophenone.

8. A process for producing the adhesive interlining cloth according to claim 5 or 6, wherein said dots have a size corresponding to an average diameter of 0.1 to 4 mm and are provided in an amount of 0.5 to 50 g/m² of the base cloth surface.

9. A process for producing adhesive interlining cloth according to claims 5 to 8, wherein the adhesive resin composition comprises a thermoplastic resin selected from polyamide type resins or polyester resins.

10. An adhesive composition for adhesive interlining cloth which comprises a thermoplastic resin and a photosensitizer.

11. An adhesive composition for adhesive interlining cloth which comprises a thermoplastic resin, a photosensitizer and a crosslinking agent.

12. The adhesive composition for adhesive interlining cloth according to claim 10 or 11, wherein the thermoplastic resin is a copolymer polyamide.

13. A composition for the adhesive interlining cloth according to claims 10 to 12, wherein the photo-sensitizer is benzophenone.

14. An adhesive interlining cloth comprising a base cloth constituting the main body of the interlining cloth and a plurality of dots of an adhesive thermoplastic resin composition provided on one side of the base cloth, which is obtained by providing the dots of said thermoplastic resin composition on the base cloth, and then irradiating the dots with actinic rays through the base cloth surface to crosslink the lower portions on the base cloth side of the dots of said thermoplastic resin composition.

15. The adhesive interlining cloth according to claim 14, wherein the adhesive thermoplastic resin composition is a thermoplastic resin selected from polyamide type resins or polyester resins.
